# EUROPÄISCHE PATENTSCHRIFT

(11) **EP 0 481 398 B1**
(45) Veröffentlichungstag und Bekanntmachung des Hinweises auf die Patenterteilung: **23.08.1995**
(21) Anmeldenummer: 91117480.3
(22) Anmeldetag: 14.10.1991
(51) Int. Cl.: A01F 15/07

(54) **Bindevorrichtung für die Ballen einer Ballenpresse**
Wrapping device for bales in a baler press
Dispositif pour envelopper des balles dans une presse à balles

(30) Priorität: 16.10.1990 DE 4032788
(43) Veröffentlichungstag der Anmeldung: 22.04.1992
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 404 083
- DE-A- 3 418 681
- GB-A- 2 212 440
- US-A- 4 409 784

## Beschreibung

Die Erfindung betrifft eine Ballenpresse mit einem Preßraum, der von Riemen, Ketten oder dergleichen teilweise umgeben ist, und eine Bindevorrichtung für die Ballen der Ballenpresse bestehend aus einer Fördervorrichtung mit zwei Walzen zum Zuführen von Bindematerial in den Preßraum, wobei die Walzen antreibbar sind und zwischen sich einen Durchlaß belassen, durch den Bindematerial geführt wird, wobei sich eine ihnen gemeinsame und durch den Durchlaß verlaufende Tangentiale zu der Förderfläche von mindestens einem der Riemen erstreckt und die Antriebsgeschwindigkeiten der Walzen so groß sind, daß in der Richtung der Tangentialen der Abstand des Auslasses des Durchlasses zu der Förderfläche des Riemens geringer ist als die Erstreckung des Bindematerials nach dem Verlassen des Durchlasses.

Die DE-A-34 18 681 offenbart eine Rundballenpresse, deren Preßraum im wesentlichen von Rollen begrenzt ist und die eine Netzbindevorrichtung enthält. Die Netzbindevorrichtung weist zwei Walzen auf, die das Netz aus einem Vorratsbehälter abziehen und zum Innern des Preßraums führen, wobei es auf die Oberfläche einer der Rollen auftrifft und von dieser zum Preßraum bewegt wird. Die beiden Rollen und eine ihnen zugeordnete Schneidvorrichtung sind anstelle einer der Rollen in die Umfangswandung des Preßraums eingefügt, so daß dort eine Rolle weniger vorhanden ist.

Dieser Rundballenpresse haftet der Nachteil an, daß zugunsten der Bindevorrichtung eine der Rollen ausgebaut werden muß, so daß einerseits ein Förderelement fehlt und andererseits eine dort vorgesehene Verkleidung einen erhöhten Reibungswiderstand aufbaut.

Bei einer anderen Rundballenpresse (GB-A-2 212 440) wird als Netz oder Folie ausgebildetes Bindematerial zwischen zwei Walzen einer Fördervorrichtung hindurchgezogen und über eine Führungsbahn zu einem Preßraum geleitet, in dem es um einen Ballen gewunden wird. Um die Entfernung zwischen der Fördervorrichtung und der Führungsbahn zu überwinden, ist ein Gebläse vorgesehen, das das Bindematerial an den Riemen zur Anlage bringt, die es in die Führungsbahn hineinziehen.

Die mit der Erfindung zu lösende Aufgabe wird darin gesehen, eine Bindevorrichtung vorzuschlagen, die die Wandung des Preßraums nicht beeinträchtigt, außerhalb von dieser angeordnet sein kann und mit wenigen Mitteln verwirklicht werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird die Wandung des Preßraums nicht unterbrochen, und das Bindemittel kann so nahe an den Riemen herangebracht werden, daß es von diesem erfaßt und zum Innern des Preßraums befördert wird, obwohl sich die Walzen außerhalb von diesem befinden.

Die dem Bindematerial aufgegebene Zentrifugalkraft der Walzen reicht aus, um es an mindestens einem der Riemen zur Anlage zu bringen, der es über eine evtl. vorhandene Führungsbahn zu dem Preßraum befördert. Der zwischen der Fördervorrichtung und dem oder den Riemen einzuhaltende Abstand ist insbesondere abhängig von der Bewegungsenergie, die das Bindematerial nach dem Verlassen des Durchlasses noch aufweist, und der Steifigkeit des Bindematerials.

Abhängig von der Bauweise der Ballenpresse können mehrere Riemen vorgesehen sein, die das Bindematerial zu dem Preßraum mitnehmen, oder anstatt der Riemen werden Ketten mit Förderstegen verwendet.

Insbesondere dann, wenn die Tangentiale der Laufrichtung des Riemens geringfügig entgegenläuft oder auf kürzester Strecke zu diesem führt, reicht eine geringe Abwurfenergie des Bindematerials aus.

Um evtl. Fehlbewegungen des Bindematerials vorzubeugen, kann ein Leitblech vorgesehen werden, das das Bindematerial zu dem Riemen führt.

Eine sichere Übertragung der Bewegungsenergie der Walzen auf das Bindematerial ist gegeben, wenn kein oder jedenfalls ein sehr geringer Schlupf zwischen dem Bindematerial und den Walzen besteht, was durch die Verwendung einer gummierten Umfangsfläche wenigstens einer der Walzen bei entsprechend engem Durchlaß erzielt wird.

Sowohl die Mitnahme des Bindematerials durch die Walzen wie auch dessen Anlage an den oder die Riemen erfolgen problemlos, wenn das Bindematerial eben über die Walzen läuft, was dadurch erreicht wird, daß es gestreckt wird; hierzu sind spiralförmige Nuten oder Erhebungen auf der Umfangsfläche wenigstens einer der Walzen vorgesehen, die beim Umlauf der Walzen das Bindematerial zu deren axialen Enden führen.

Die Abwurfrichtung des Bindematerials nach dem Verlassen des Durchlasses kann auch dadurch bestimmt werden, daß eine der Walzen schneller umläuft als die andere, so daß der Geschwindigkeitsvektor von der geometrischen Tangentialen in der gewollten Richtung abweicht.

Ein bei der Verwendung einer Bindevorrichtung auftretendes Problem der Unterbringung einer Trennvorrichtung für das Bindematerial in einem schmalen Zwischenraum zwischen der Fördervorrichtung und den Riemen wird dadurch gelöst, daß sich das Leitblech innerhalb des Bewegungsbereichs des Messers befindet und das Gegenmesser direkt an dem gespannten Trum zwischen der der Führungsbahn nächstgelegenen Walze und der Führungsbahn angeordnet wird.

In der Zeichnung ist ein nachfolgend näher beschriebenes Ausführungsbeispiel der Erfindung dargestellt. Es zeigt:
- Fig. 1: eine Ballenpresse mit einer Bindevorrichtung in Seitenansicht und in schematischer Darstellung und
- Fig. 2: die Bindevorrichtung in Seitenansicht.

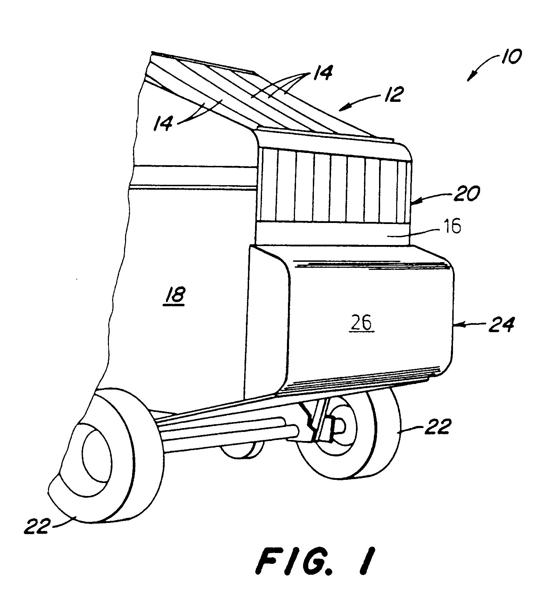

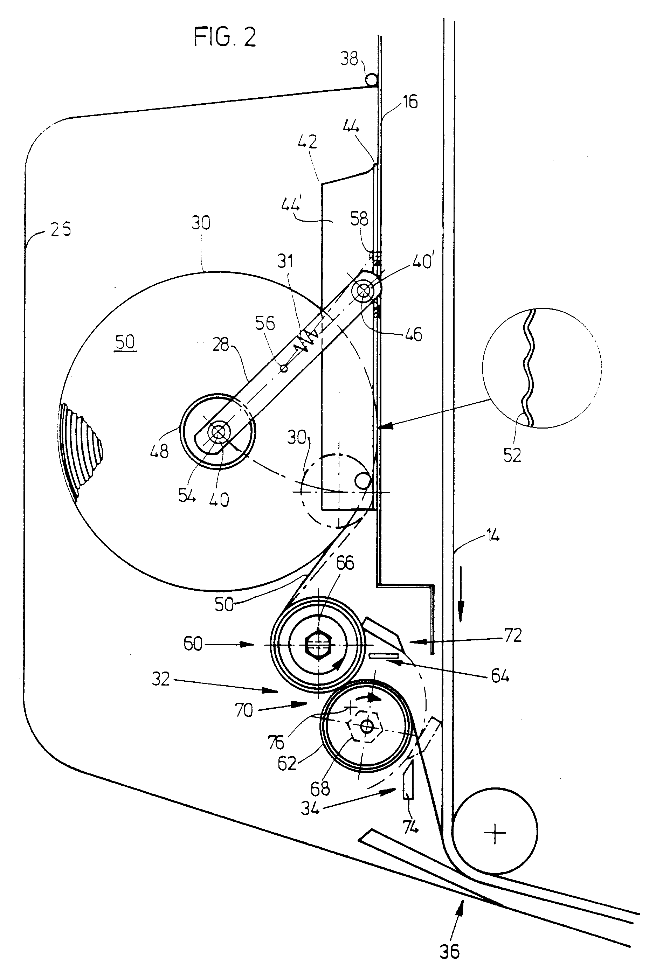

Eine Ballenpresse 10 in der Art einer Rundballenpresse bildet in ihrem Inneren einen Preßraum 12, der außer an seinen Stirnflächen von Riemen 14 begrenzt wird. Auf der rückwärtigen und in Figur 1 rechts gelegenen Seite werden die Riemen 14 von einer aufgehenden Wand 16 bedeckt, während der Preßraum 12 seitlich von Wänden 18 und 20 geschlossen wird. Die Ballenpresse 10 stützt sich auf Rädern 22 beweglich auf dem Boden ab und trägt an ihrer Rückseite angrenzend an die Wand 16 eine Bindevorrichtung 24, deren Einzelteile in Figur 2 dargestellt sind.

Eine derartige Ballenpresse 10 wird dazu benutzt, auf dem Boden liegendes Erntegut aufzunehmen und es zu Ballen zu pressen, um das Erntegut für eine weitere Verwendung handhabbar zu machen. Nachdem das Erntegut in dem Preßraum 12 verdichtet worden ist, wird es gebunden und auf dem Boden abgelegt. Die Ausbildung der Ballenpresse 10 als eine bewegliche Rundballenpresse stellt nur eine mögliche Variante dar; die Ballenpresse 10 könnte auch quaderförmige Ballen erzeugen, und anstatt des Ernteguts könnte auch Industriematerial wie Papier, Lumpen, Baumwolle, Holzwolle oder dergleichen gebunden werden - in diesen Fällen könnte die Ballenpresse 10 auch stationär betrieben werden.

Hinsichtlich des Preßraums 12, der Riemen 14, der Wände 16 bis 20 und der Räder 24 kann auf herkömmliche Ballenpressen 10 verwiesen werden; nähere Ausführungen hierzu erübrigen sich.

Die Bindevorrichtung 24, wie sie für dieses Ausführungsbeispiel in Figur 2 zu sehen ist, wird von einem Kasten 26 umgeben und enthält jedenfalls Arme 28, eine Rolle 30, einen Kraftspeicher 31, eine Fördervorrichtung 32, eine Trennvorrichtung 34 und eine Führungsbahn 36.

Der Kasten 26 ist in einem Gelenk 38 vertikal schwenkbar an der Wand 16 befestigt und schützt die gesamte Bindevorrichtung 24 vor Schmutz und äußeren Einflüssen.

Die Arme 28 sind aus Profilmaterial geformt und nehmen eine Länge ein, die den größtmöglichen Radius der Rolle 30 um ca. ein Viertel überschreitet. Beidenends sind die Arme 28 mit Lagern 40, 40' versehen, die eine schwenkbewegliche Befestigung der Arme 28 ermöglichen. Das Lager 40 erlaubt die drehbewegliche Aufnahme der Rolle 30. Zur Anlenkung der Arme 28 an der Wand 16 ist ein Winkelstahl 42 vorgesehen, dessen einer Schenkel 44 an der Wand 16 befestigt ist und dessen anderer Schenkel 44' zur Aufnahme des Lagers 40' ausgebildet ist; hierzu erstreckt sich ein Lagerbolzen 46 senkrecht zu der Zeichenebene von dem Schenkel 42'' weg. Es ist somit zu erkennen, daß die Arme 28 in der Zeichenebene um die Lagerbolzen 46 schwenken können.

Die Rolle 30 setzt sich in diesem Fall aus einem Träger 48 und Bindematerial 50 zusammen und kommt mit einem Teilbereich ihrer Umfangsfläche an der Wand 16 auf einer Fläche 52 zur Anlage. Figur 2 zeigt die Rolle 30 in ihren beiden Endstellungen und mit ihren dazugehörigen Außendurchmessern.

Der Träger 48 kann aus einem Rohr aus Pappe, Kunststoff oder Metall bestehen, an dessen Enden Zapfen 52 zum Einsatz in die Lager 40 angebracht sind.

Das Bindematerial 50 ist auf den Träger 48 aufgewickelt und wird dazu benutzt, den in dem Preßraum 12 gebildeten Ballen zu binden. Als Bindematerial 50 kommt Folie, Netz, Garn, Papier oder dergleichen in Betracht, wie dies bekannt ist. Während das Bindematerial 50 durch die Führungsbahn 36 dem Preßraum 12 zugeleitet und dort von dem Ballen mitgenommen wird, dreht sich die Rolle 30 mit den Zapfen 52 des Trägers 48 in den Lagern 40 und nimmt mit ihrem Außendurchmesser stetig ab. Infolge der Außendurchmesserverringerung nimmt der Abstand zwischen der Drehachse der Rolle 30 und der Wand 16 ab, und die Rolle 30 schwenkt mit den Armen 28 um die Lagerbolzen 46, um auf der Fläche 52 an der Wand 16 zur Anlage zu kommen.

Die Fläche 52 kann eben wie ein lackiertes Blech ausgebildet sein. Die Fläche 52 kann aber auch mit einem Belag aus Gummi oder dergleichen beschichtet sein, der einen hohen Reibungskoeffizienten hat. Alternativ hierzu kann die Fläche 52 auch wellenförmig ausgestaltet sein, wie dies in einer Darstellung rechts von den Riemen 14 in Figur 2 zu sehen ist; diese Darstellung ist um den Faktor 2 vergrößert. Schließlich kann die Fläche 52 mit unterschiedlichen Belägen versehen sein, die abhängig von der sich ändernden Lage der Rolle 30 mit dieser in Berührung kommen. Es ist Figur 2 zu entnehmen, daß der Angriffsbereich der Rolle 30 an der Fläche 52 nach unten wandert, wenn sich ihr Außendurchmesser verringert. Demnach kann ein Reibbelag mit einem höheren Reibungskoeffizienten an einer tiefer gelegenen Stelle der Fläche 52 die sich verringernde Reibkraft, die von dem Gewicht der Rolle 30 herrührt, ausgleichen.

Der Kraftspeicher 31 wird in diesem Ausführungsbeispiel von mechanischen Zugfedern gebildet, die einenends, nämlich an den Armen 28, an einen Stift 56 und anderenends, nämlich an dem Winkelstahl 42, an einen Stift 58 angehängt sind. Die Lage der Stifte 56, 58 ist so gewählt, daß diese mit dem Lagerbolzen 46 auf einer Linie liegen, wenn sich die Rolle 30 zwischen ihrer am weitesten links und ihrer am weitesten rechts gelegenen Stellung befindet. In dieser Zwischenstellung, die auch eine Totgangstellung darstellt, wird der Kraftspeicher 31 am meisten gespannt und kann diese Spannung beim Überwinden der Zwischenstellung auf jeder Seite abgeben, indem er die Arme 28 mit der Rolle 30 um die Lagerbolzen 46 schwenkt. Je weiter die Arme 28 über die Zwischenstellung hinaus bewegt werden, desto größer wird der Abstand einer gedachten Linie zwischen den Stiften 56, 58 und dem Mittelpunkt des Lagerbolzens 42 und somit der des Hebelarms, über den der Kraftspeicher 31 auf die Arme 28 wirken kann.

Es ist ersichtlich, daß sich nach dem Überschreiten der Zwischenstellung in einer Bewegung entgegen dem Uhrzeigerdrehsinn der Kraftspeicher 31 zu verkürzen sucht und dabei die Rolle 30 bzw. das auf ihr aufgewickelte Bindematerial an die Fläche 52 anpreßt. Nach dem Überschreiten der Zwischenstellung in einer Bewegung im Uhrzeigerdrehsinn verkürzt sich der Kraftspeicher 31 zwar ebenfalls - er hebt dabei aber die Rolle 30 an und verringert dabei den Anlagedruck des Bindematerials 50 auf die Fläche 52. Demnach wird ein Ausgleich für die zu beiden Seiten der Zwischenstellung unterschiedliche Reibkraft aufgrund des Gewichts der Rolle 30 durch den Kraftspeicher 31 geschaffen.

Die Fördervorrichtung 32 wird in diesem Ausführungsbeispiel von einer oberen und einer unteren Walze 60 und 62, zwischen denen das Bindematerial 50 hindurch geführt wird, und einem Leitblech 64 gebildet.

Die obere Walze 60 ist auf ihrem Außenumfang gummibeschichtet und weist somit einen hohen Reibungskoeffizienten auf ihrer Umfangsfläche auf. Die obere Walze 60 wird in der Richtung des gezeigten Pfeils von einer nicht gezeigten Antriebseinrichtung angetrieben, wie dies bekannt ist; hierzu ist sie auf einer Welle 66 drehfest gelagert.

Die untere Walze 62 ist ebenfalls auf einer Welle 68 drehbar in den Wänden 18 gelagert und wird normalerweise nicht angetrieben, sondern läuft aufgrund der Reibung, die die obere Walze 60 auf sie ausübt, mit. Die Umfangsfläche der unteren Walze 62 ist nahezu auf ihrer gesamten Fläche glatt, so daß die untere Walze 62 aus Metall oder einem harten Kunststoff gebildet sein kann. Wahlweise kann diese untere Walze 62 aber auch angetrieben werden, und zwar mit einer höheren Umfangsgeschwindigkeit als die obere Walze 60. Schließlich sind in die axialen Endbereiche der unteren Walze 62 nicht gezeigte spiralförmige Nuten eingearbeitet, die eine Streckung des Bindematerials 50 zu den axialen Enden der Walzen 60, 62 während deren Drehbewegung bewirken.

Beide Walzen 60, 62 definieren zwischen sich einen Durchlaß 70, durch den das Bindematerial 50 geführt wird.

Die Anordnung der Walzen 60, 62 ist so gewählt, daß eine durch den Durchlaß 70 verlaufende und beiden Walzen 60, 62 gemeinsame Tangentiale im wesentlichen senkrecht zu der Haupterstreckungsebene der Riemen 14 verläuft oder gar zu den Riemen 14 hin schräg nach oben verläuft. Die Nähe der Walzen 60, 62 zu der Hauptfläche der Riemen 14 ist so gewählt, daß das Bindematerial 50 mühelos und unmittelbar nach dem Verlassen des Durchlasses 70 in Kontakt mit den Riemen 14 gerät und von diesen mitgerissen wird, sobald es von den in Drehung versetzten Walzen 60, 62 von dem Träger 48 abgezogen wird. Wird die untere Walze 60 mit einer höheren Umfangsgeschwindigkeit angetrieben als die obere Walze 60, wird das Bindematerial 50 aufgrund der Geschwindigkeitsdifferenz nach oben von der Tangentialen weg bewegt.

Das Leitblech 64 ist oberhalb der durch den Durchlaß 70 verlaufenden Tangentialen und zu dieser ungefähr parallel angeordnet, wobei seine Leitfläche ungefähr senkrecht auf der Haupterstreckungsebene der Riemen 14 in deren angrenzenden Bereich verläuft. Auf diese Weise gleitet das Bindematerial 50 nach dem Verlassen des Durchlasses 70 an der Unterseite des Leitblechs 64 entlang, wird so zu den Riemen 14 geführt und kommt mit diesen schließlich in Berührung. Aus dem Stand der Technik bekannte Vorrichtungen zum Anlegen des Bindematerials 50 an die Riemen 14 mittels Druckluft oder sonstiger mechanischer Mittel sind somit nicht erforderlich, da das Bindematerial 50 von den Walzen 60, 62 selbst an die Riemen 14 zur Anlage gebracht wird.

Die Trennvorrichtung 34 enthält ein Messer 72 und ein Gegenmesser 74 und dient dazu, das um den Ballen gewundene Bindematerial 50 von dem auf dem Träger 30 verbleibenden Bindematerial 50 zu trennen, sobald der Ballen ausreichend fest gebunden ist. Die Trennvorrichtung 34 befindet sich in unmittelbarer Nachbarschaft zu der Fördervorrichtung 32 und wird entweder manuell oder automatisch bedient. Die Länge und die Haupterstreckungsrichtung des Messers 72 und des Gegenmessers 72 entsprechen denen der Walzen 60 und 62.

Das Messer 72 ist als Leiste mit einer im unteren Bereich angefasten Schnittkante 72' ausgebildet und auf einem nicht gezeigten schwenkbaren Träger um einen Schwenkpunkt 76 beweglich geführt. Diese Bewegung vollzieht sich in dem Raum zwischen den Walzen 60 und 62 und den Riemen 14. Während der Bewegung kreuzt das Messer 72 das Bindematerial 50, das sich bis zu den Riemen 14 erstreckt, und erfaßt dieses. In diesem bevorzugten Ausführungsbeispiel nimmt das Messer 72 eine Ruhestellung oberhalb des Durchlasses 70 und in der Nähe der oberen Walze 60 ein und bewegt sich in eine Trennstellung, die unterhalb des Durchlasses 70 im unteren Bereich der unteren Walze 62 liegt.

Das Gegenmesser 74 ist stationär und auf nicht gezeigte Weise an den Wänden 16 bis 20 befestigt. Es weist ebenfalls die Form einer angefasten Leiste auf, wobei die Schnittkante 74' oben und dem Messer 72 zugelegen angeordnet ist. Während des Schneid-, Scher- oder Trennvorgangs streifen die beiden Schnittkanten 72' und 74' aneinander entlang.

Der Trennvorgang des Bindematerials 50 vollzieht sich nach dem Vorbeschriebenen wie folgt.

Auf ein manuelles oder automatisches Signal hin bewegt sich das Messer 72 auf seinem Träger auf einem um den Schwenkpunkt 76 verlaufenden Kreisbogen von der Ruhestellung aus nach unten zur Trennstellung. Während dieser Bewegung trifft das Messer 62 kurz vor dem Erreichen des Gegenmessers 74 auf das sich zu den Riemen 14 erstreckende und um die untere Walze 62 gespannte Bindematerial 50, das von dem in dem Preßraum 12 drehenden Ballen in die Führungsbahn 36 gezogen wird. Das Bindematerial 50 wird im weiteren Verlauf an das Gegenmesser 74 herangeführt und zwischen den beiden Schnittkanten 72' und 74' abgeschert. Der abgeschnittene Teil des Bindematerials 50 wird von dem Ballen in den Preßraum 12 gezogen und dort vollends um den Ballen gewickelt. Nach dem Trennvorgang wird auf das auf der Rolle 30 aufgewickelte Bindematerial 50 kein Zug mehr ausgeübt, und die obere Walze 60 wird nicht mehr angetrieben. Demnach ist der Abzug des Bindematerials 50 von der Rolle 30 unmittelbar nach dem Trennvorgang beendet. Insbesondere wird die Rolle 30 aufgrund ihrer Anlage an der Fläche 52 an einem Nachlaufen gehindert.

## Patentansprüche

1. Ballenpresse (10) mit einem Preßraum (12), der von Riemen (14), Ketten oder dergleichen teilweise umgeben ist, und eine Bindevorrichtung (24) für die Ballen der Ballenpresse (10) bestehend aus einer Fördervorrichtung (32) mit zwei Walzen (60, 62) zum Zuführen von Bindematerial (50) in den Preßraum (12), wobei die Walzen (60, 62) antreibbar sind und zwischen sich einen Durchlaß (70) belassen, durch den Bindematerial (50) geführt wird, wobei sich eine ihnen gemeinsame und durch den Durchlaß (70) verlaufende Tangentiale zu der Förderfläche von mindestens einem der Riemen (14) erstreckt und die Antriebsgeschwindigkeiten der Walzen (60, 62) so groß sind, daß in der Richtung der Tangentialen der Abstand des Auslasses des Durchlasses (70) zu der Förderfläche des Riemens (14) geringer ist als die Erstreckung des Bindematerials (50) nach dem Verlassen des Durchlasses (70), dadurch gekennzeichnet, daß die Walzen (60, 62) außerhalb der von den Riemen (14) gebildeten Umfassung des Preßraums (12) angeordnet sind, daß die Tangentiale unter einem spitzen Winkel mit der Förderfläche des Riemens (14) steht, und daß die Abwurfrichtung der Laufrichtung der Riemen (14) entgegengesetzt ist.

2. Ballenpresse nach Anspruch 1, dadurch gekennzeichnet, daß die Tangentiale anstatt unter einem spitzen Winkel senkrecht oder nahezu senkrecht zu der Förderfläche des Riemens (14) verläuft.

3. Ballenpresse nach mindestens einem der vorherigen Ansprüche, gekennzeichnet durch ein Leitblech (64), das sich zwischen dem Durchlaß (70) und der Förderfläche des Riemens (14) zum Lenken des Bindematerials (50) erstreckt.

4. Ballenpresse nach mindestens einem der vorherigen Ansprüche, dadurch gekennzeichnet, daß eine der Walzen (60, 62), insbesondere die positiv angetriebene Walze (60), mit einem Belag, insbesondere Gummi, beschichtet ist, der einen hohen Reibungskoeffizienten aufweist.

5. Ballenpresse nach mindestens einem der vorherigen Ansprüche, dadurch gekennzeichnet, daß wenigstens eine der Walzen (60, 62) auf ihrer Umfangsfläche mit spiralförmigen Nuten oder Erhebungen versehen ist, die in bezug auf die Förderrichtung des Bindematerials (50) eine zu den axialen Enden der betreffenden Walze (60, 62) führende Bewegung des Bindematerials (50) erzeugen.

6. Ballenpresse nach mindestens einem der vorherigen Ansprüche, dadurch gekennzeichnet, daß die Walzen (60, 62) mit unterschiedlichen Umfangsgeschwindigkeiten angetrieben werden.

7. Ballenpresse nach mindestens einem der vorherigen Ansprüche, dadurch gekennzeichnet, daß eine Trennvorrichtung (34) mit einem schwenkbaren Messer (72) vorgesehen ist, wobei das Leitblech (64) innerhalb des Schwenkkreises des Messers (72) gelegen ist.

8. Ballenpresse nach mindestens einem der vorherigen Ansprüche, dadurch gekennzeichnet, daß das Messer (72) zum Trennen des Bindematerials (50) im wesentlichen in der Laufrichtung der Riemen (14) bewegbar ist.

9. Ballenpresse nach mindestens einem der vorherigen Ansprüche, gekennzeichnet durch ein Gegenmesser (74), das zwischen einer stromabwärts der Kontaktstelle des Bindematerials (50) mit der Förderfläche des Riemens (14) liegenden Stelle und der am tiefsten gelegenen Walze (62) angeordnet ist.

## Claims

1. Baling press (10) with a pressing chamber (12) which is partially surrounded by belts (14), chains or the like, and a binding device (24) for the bales of the baling press (10), consisting of a conveying device (32) with two rollers (60, 62) for feeding binding material (50) into the pressing chamber (12), wherein the rollers (60, 62) can be driven and leave between them a passage (70) through which binding material (50) is guided, wherein a tangent which is common to them and passes through the passage (70) extends to the conveying surface from at least one of the belts (14) and the driving speed(s) of the rollers (60, 62) are so high that in the direction of the tangent the distance from the outlet of the passage (70) to the conveying surface of the belt (14) is smaller than the extent of the binding material (50) after leaving the passage (70), characterised in that the rollers (60, 62) are arranged outside the boundary of the pressing chamber (12) formed by the belts (14), in that the tangent is at an acute angle to the conveying surface of the belt (14), and in that the direction of discharge is opposite the direction of travel of the belts (14).

2. Baling press according to claim 1, characterised in that the tangent extends, instead of at an acute angle, perpendicularly or almost perpendicularly to the conveying surface of the belt (14).

3. Baling press according to one or more of the preceding claims, characterised by a guide plate (64) which extends between the passage (70) and the conveying surface of the belt (14) for deflecting the binding material (50).

4. Baling press according to at least one of the preceding claims, characterised in that one of the rollers (60, 62), in particular the positively driven roller (60), is coated with a covering, in particular rubber, which has a high coefficient of friction.

5. Baling press according to at least one of the preceding claims, characterised in that at least one of the rollers (60, 62) is provided on its peripheral surface with spiral grooves or projections which in relation to the direction of conveying of the binding material (50) produce a movement of the binding material (50) leading to the axial ends of the roller concerned (60, 62).

6. Baling press according to at least one of the preceding claims, characterised in that the rollers (60, 62) are driven at different circumferential speeds.

7. Baling press according to at least one of the preceding claims, characterised in that a separating device (34) with a pivotable blade (72) is provided, wherein the guide plate (64) is situated within the pivot circle of the blade (72).

8. Baling press according to at least one of the preceding claims, characterised in that the blade (72) is movable essentially in the direction of travel of the belts (14) for separation of the binding material (50).

9. Baling press according to at least one of the preceding claims, characterised by a counterblade (74) which is arranged between a point located downstream of the point of contact of the binding material (50) with the conveying surface of the belt (14) and the lowermost roller (62).

## Revendications

1. Presse à balles (10) comportant un espace de pressage (12), qui est entouré partiellement par des courroies (14), des chaînes ou analogues, et un dispositif de liage (24) pour les balles de la presse à balles (10), constitué par un dispositif d'entraînement (32) comportant deux cylindres (60,62) servant à amener le matériau de liage (50) dans l'espace de pressage (12), et dans lequel les cylindres (60,62) peuvent être entraînés et laissent subsister entre eux un passage (70), à travers lequel le matériau de liage (50) est guidé, et dans laquelle une tangente, qui est commune à ces cylindres et traverse le passage (70) s'étend en direction de la surface d'entraînement d'au moins l'une des courroies (14) et les vitesses d'entraînement des cylindres (60,62) sont suffisamment élevés pour que, dans la direction de la tangente, la distance entre la sortie du passage (70) et la surface d'entraînement de la courroie (14) soit inférieure à la distance sur laquelle s'étend le matériau de liage (50) après avoir quitté le passage (70), caractérisée en ce que les cylindres (60,62) sont disposés à l'extérieur de la périphérie de l'espace de pressage (12), délimitée par les courroies (14), que la tangente fait un angle aigu par rapport à la surface d'entraînement de la courroie (14) et que la direction de déchargement s'étend en sens opposé de la direction de circulation des courroies (14).

2. Presse à balles selon la revendication 1, caractérisée en ce que la tangente ne s'étend pas sous un angle aigu, mais perpendiculairement ou approximativement perpendiculairement par rapport à la surface d'entraînement de la courroie (14).

3. Presse à balles selon au moins l'une des revendications précédentes, caractérisée par une chicane (64), qui s'étend entre le passage (70) et la surface d'entraînement de la courroie (14) de manière à dévier le matériau de liage (50).

4. Presse à balles selon au moins l'une des revendications précédentes, caractérisée en ce qu'au moins l'un des cylindres (60,62), notamment le cylindre (60) entraîné positivement, est recouvert par un revêtement, notamment du caoutchouc, qui possède un coefficient de frottement élevé.

5. Presse à balles selon au moins l'une des revendications précédentes, caractérisée en ce qu'au moins l'un des cylindres (60,62) comporte, sur sa surface circonférentielle, des rainures ou des bossages de forme hélicoïdale, qui produisent, par rapport à la direction d'entraînement du matériau de liage (50), un déplacement de ce matériau de liage (50), qui s'effectue en direction des extrémités axiales du cylindre considéré (60,62).

6. Presse à balles selon au moins l'une des revendications précédentes, caractérisée en ce que les cylindres (60,62) sont entraînés avec des vitesses circonférentielles différentes.

7. Presse à balles selon au moins l'une des revendications précédentes, caractérisée en ce qu'il est prévu un dispositif de sectionnement (34) possédant un couteau pivotant (72), la chicane (64) étant disposée à l'intérieur du cercle de pivotement du couteau (72).

8. Presse à balles selon au moins l'une des revendications précédentes, caractérisée en ce que le couteau (72) servant à sectionner le matériau de liage (50) est déplaçable essentiellement dans la direction de circulation des courroies (14).

9. Presse à balles selon au moins l'une des revendications précédentes, caractérisée par un couteau antagoniste (74), qui est disposé entre un emplacement situé en aval de la zone de contact entre le matériau de liage (50) et la surface d'entraînement de la courroie (14), et le cylindre (62) qui est le plus bas.
